# EUROPEAN PATENT APPLICATION

(11) **EP 4 760 269 A1**
(43) Date of publication of application: **17.06.2026**
(21) Application number: 25215745.8
(22) Date of filing: 13.11.2025
(51) Int. Cl.: G01P 5/26, B64D 43/00, G01P 13/02, G01S 17/58, G01S 17/95, B64D 43/02, G01P 5/00

(54) **LASER-BASED SYSTEM FOR MEASURING FLUID DATA OF A VEHICLE**

(30) Priority: 11.12.2024 US 202418977044
(71) Applicant: The Boeing Company, Arlington, VA 22202 (US)
(72) Inventor: HOWE, Wayne R., 22202 Arlington (US); HUNT, Jeffrey H., 22202 Arlington (US)
(74) Representative: Plasseraud IP

(57) **Abstract**

Examples are disclosed relating to a laser-based system for measuring fluid data of a vehicle. In one example, the system includes a laser, a sensor system, and a computing system. The computing system is configured to send control signals to the laser causing the laser to emit laser light into a medium outside of the vehicle to induce a one or more plasma sparks in the medium. The computing system is further configured to receive, from the sensor system, sensor data indicating one or more properties of the one or more plasma sparks, including an orientation of the one or more plasma sparks relative to the vehicle. The computing system is further configured to calculate the fluid data of the vehicle based at least on the sensor data including the orientation of the one or more plasma sparks relative to the vehicle and output the fluid data of the vehicle.

## Description

### FIELD

The present disclosure relates generally to measuring fluid data of a vehicle and, more particularly, to observing laser-induced plasma spark(s) to measure fluid data of a vehicle.

### BACKGROUND

A conventional sensor for measuring fluid data of a vehicle is typically a mechanical device that is mounted on an external surface of the vehicle. In one example, a conventional mechanical sensor for measuring an angle of attack (AoA) of an aircraft, is mounted on a surface of a fuselage proximate to a nose of the aircraft. More particularly, the conventional mechanical sensor includes a mechanical probe that extends from the surface of the aircraft and rotates to align itself with the local airflow, pointing into the relative wind to measure the AoA of the aircraft.

The conventional mechanical sensor has various issues. As one example, the probe that extends from the surface of the aircraft increases drag of the aircraft. Moreover, the increase in drag caused by the conventional mechanical sensor leads to an increase in fuel consumption of the aircraft. As another example, the conventional mechanical sensor includes mechanical components, such as tubes, gears, arms, linkages, etc., that require maintenance to ensure proper functionality of the conventional mechanical sensor. Moreover, these mechanical components are susceptible to multiple failure modes (e.g., insects, sand, bird strikes, ice, wear, and corrosion).

### SUMMARY

The present disclosure provides a system for measuring fluid data of a vehicle as defined by independent claim 1 and a method of measuring fluid data as defined by independent claim 10. Preferred embodiments are defined in the appended dependent claims.

Examples are disclosed relating to a laser-based system and a method for sensing, detecting, observing, monitoring, characterizing, or measuring fluid data, fluid information, fluid characteristics, "air data", "fluid data", or "medium data" of a vehicle that may be an aircraft. In one example, the system includes a laser, a sensor system, and a computing system. The computing system is configured to send control signals to the laser causing the laser to emit laser light into a medium outside of the vehicle to induce one or more plasma sparks in the medium. The computing system is further configured to receive, from the sensor system, sensor data indicating one or more properties of the one or more plasma sparks including an orientation, location, direction, angle, or velocity of the one or more plasma sparks relative to the vehicle and/or relative to one or more other plasma sparks. The computing system is further configured to calculate the fluid data of the vehicle based at least on the sensor data including the orientation of the one or more plasma sparks relative to the vehicle and output the fluid data of the vehicle.

In another example, the method sends to a laser positioned in, on, or attached to the vehicle, control signals causing the laser to emit laser light into a medium outside of the vehicle to induce one or more plasma sparks in the medium. The method receives, from a sensor system positioned in, on, or attached to the vehicle, sensor data indicating one or more properties of the one or more plasma sparks detected by the sensor system, including an orientation of the one or more plasma sparks relative to the vehicle and/or relative to other plasma sparks. The method calculates the fluid data of the vehicle based at least on the sensor data, indicating the orientation of the one or more plasma sparks relative to the vehicle and/or relative to other plasma sparks and outputs the fluid data of the vehicle.

The features and functions that have been discussed can be achieved independently in various embodiments or may be combined in yet other embodiments, further details of which can be seen with reference to the following description and drawings.

### BRIEF DESCRIPTION OF THE DRAWINGS

FIG. 1 shows an example aircraft including a laser-based system for measuring fluid data of the aircraft.
FIG. 2 shows a front view of the aircraft of FIG. 1 including the laser-based system for measuring fluid data of the aircraft.
FIG. 3 shows a schematic block diagram of an example laser-based system for measuring fluid data of a vehicle.
FIG. 4 shows a schematic block diagram of a single laser that can be employed in the laser-based system of FIG. 3.
FIG. 5 shows a schematic block diagram of multiple lasers that can be employed in the laser-based system of FIG. 3.
FIGS. 6A-6D show example visual representations of plasma sparks in different orientations.
FIGA. 7A-7B show an example method of measuring fluid data of a vehicle.
FIG. 8 shows an example computing system.

### DETAILED DESCRIPTION

A conventional sensor for measuring fluid data of a vehicle is typically a mechanical device that is mounted on an external surface of the vehicle. In one example, a conventional mechanical sensor for measuring an angle of attack (AoA) of an aircraft is mounted on a surface of a fuselage proximate to a nose of the aircraft. More particularly, the conventional mechanical sensor includes a mechanical probe that extends from the surface of the aircraft and rotates to align itself with the local airflow, pointing into the relative wind to measure the AoA of the aircraft.

The conventional mechanical sensor has various issues. As one example, the probe that extends from the surface of the aircraft increases drag of the aircraft. Moreover, the increase in drag caused by the conventional mechanical sensor leads to an increase in fuel consumption of the aircraft. As another example, the conventional mechanical sensor includes mechanical components, such as tubes, gears, arms, linkages, etc., that require maintenance to ensure proper functionality of the conventional mechanical sensor. Moreover, these mechanical components are susceptible to multiple failure modes (e.g., insects, sand, bird strikes, ice, wear, and corrosion). The conventional mechanical AoA sensor is merely one example of any one of a number of different conventional mechanical sensors that are used to measure different types of fluid data of a vehicle, such as an aircraft. Such conventional mechanical sensors suffer from at least the same issues described above as well as other issues described herein. Accordingly, examples are disclosed relating to a laser-based system for measuring fluid data of a vehicle. In one example, the system includes a laser, a sensor system, and a computing system positioned in, on, outside of, or attached to the vehicle. The computing system is configured to send control signals to the laser causing the laser to emit laser light into a medium outside of the vehicle to induce one or more plasma sparks in the medium. The term plasma spark refers to a 1-dimensional phenomenon occurring at a particular position (e.g., X, Y, Z coordinates). Each plasma spark of the one or more plasma sparks has an individual position and an orientation that can be tracked by the sensor system. In examples where a plurality of plasma sparks is generated by the laser-based system, the plurality of plasma sparks also have an orientation and can be tracked relative to each other and/or relative to the vehicle. The computing system is further configured to receive, from the sensor system, sensor data indicating one or more properties of the one or more plasma sparks, including the orientation of the one or more plasma sparks relative to the vehicle and/or relative to other plasma sparks. The computing system is further configured to calculate the fluid data of the vehicle based at least on the sensor data, including the orientation of the one or more plasma sparks relative to the vehicle and/or relative to other plasma sparks, and to output the fluid data of the vehicle. The laser-based system leverages the observed, sensed, detected, monitored, characterized, or measured behavior of the one or more plasma sparks in the medium outside of the vehicle to calculate different types of environmental parameters represented as fluid data. For example, observation of the behavior of the one or more plasma sparks in the medium can be used to calculate highly accurate real-time measurements of AoA, velocity of the vehicle (e.g., airspeed in the example of the aircraft), a rate of climb or descent (e.g., vertical airspeed in the example of the aircraft), and a characterization of flow of the medium (e.g., airflow, side-slip, vortices, laminar flow, turbulent flow, unusual perturbations, and windshear), among other environmental parameters of the vehicle.

The plasma sparks are generated due to a breakdown of the medium in which the laser light is emitted from the laser. This allows for the plasma sparks to be observable without having to seed the medium with any specific material, which is the case when employing LiDAR technology or other seeding systems. Moreover, in some examples, the plasma sparks are visible to the human eye. This allows for the laser-based sensor system to be easily tested for functionality via visual confirmation of the plasma sparks being generated outside of the vehicle. In the example where the laser-based system is employed in the aircraft, the laser-based system can be tested via visual confirmation of the plasma sparks, either from the ground pre-flight, from the cockpit during flight, or on a display in the cockpit of the aircraft.

The one or more plasma sparks can be generated by a low-power laser that consumes a relatively small amount of energy that may be comparable, or even less, than the amount of energy consumed by a conventional mechanical sensor. Moreover, the laser light emitted by the laser to generate the plasma sparks has an amount of energy that is suitably low enough so as not to be harmful to humans or the environment.

Furthermore, in examples where the components of the laser-based system are positioned in the vehicle, the laser-based system does not require any external probes or other external components. As such, in said examples, the laser-based system reduces drag of the vehicle relative to a vehicle that employs a conventional mechanical sensor that includes an external probe (e.g., a conventional mechanical AoA sensor). Moreover, the reduced drag results in reduced fuel consumption of the vehicle relative to a vehicle that employs a conventional mechanical sensor.

Additionally, because the laser-based system includes fewer mechanical components than a conventional mechanical sensor, the laser-based system requires less maintenance relative to a conventional mechanical sensor that includes numerous mechanical components (e.g., tubes, gears, arms, linkages). Moreover, because the laser-based system is positioned in the vehicle (in some examples) and has fewer mechanical components, the laser-based system has fewer failure modes relative to a conventional mechanical sensor that extends away from the external surface of the vehicle. For example, the laser-based system is less susceptible to insects, sand, bird strikes, ice, water, and corrosion, among other failure modes.

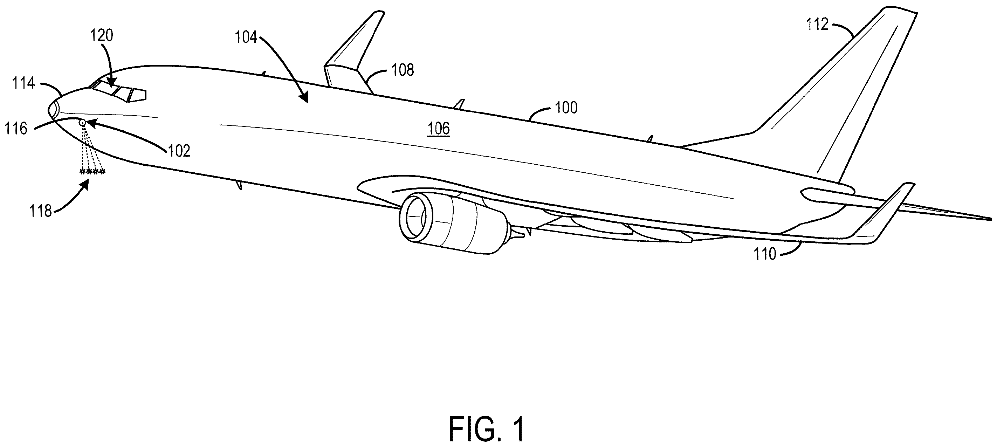

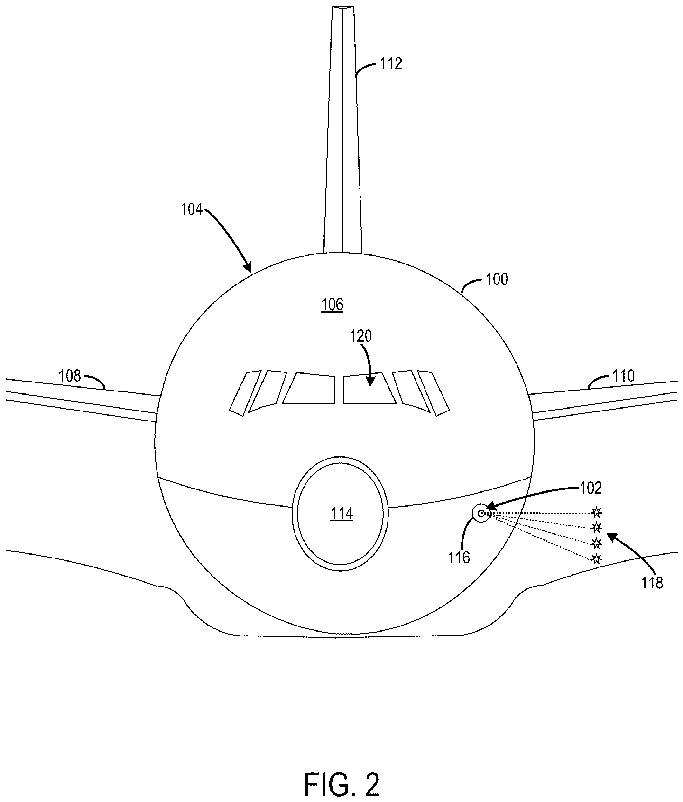

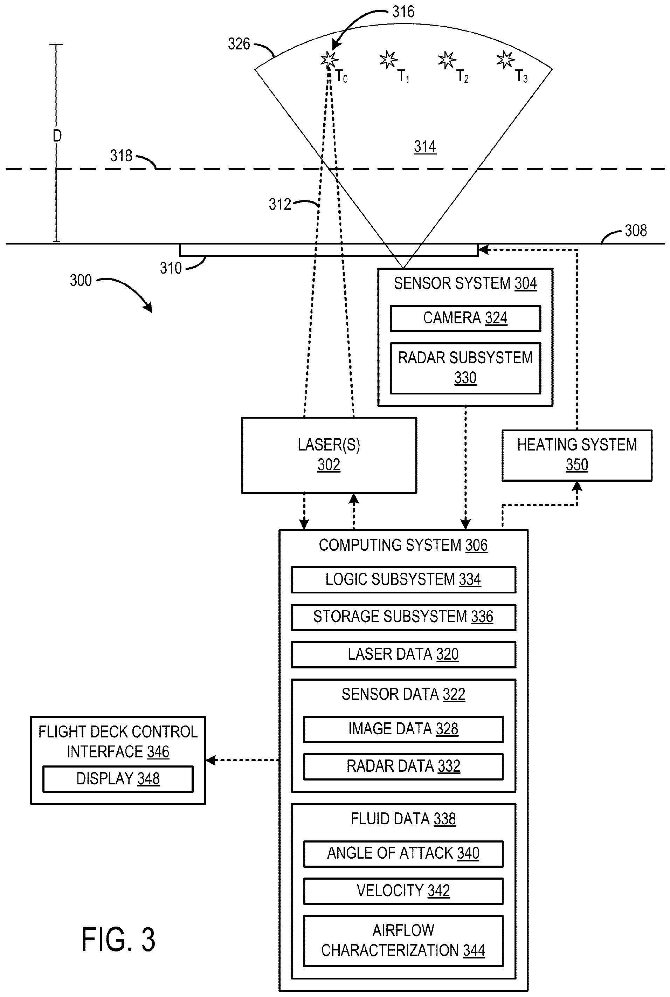

FIGS. 1 and 2 show an example aircraft 100 including a laser-based system 102 for measuring fluid data of the aircraft 100. As shown in FIG. 1, the aircraft 100 includes a frame 104 that supports the structural components and systems of the aircraft 100. The frame 104 includes a fuselage 106, wings 108, 110, and a tail assembly 112 among other structural components of the aircraft. In an example, the laser-based system 102 is positioned in a forward region of the fuselage 106 proximate to a nose 114 of the aircraft 100. In other examples, the laser-based system 102 is positioned in other locations on the vehicle. For example, the laser-based system 102 may be positioned so that the laser is farther back on the fuselage, above or below the fuselage, in front of or behind the fuselage, over or under the wings or tail, or positioned at a leading edge of the wings or tail. More particularly, as shown in FIG. 2, a window 116 is positioned in the frame 104 of the aircraft 100, and the laser-based system 102 is positioned to emit laser light through the window 116 to the air outside of the aircraft 100 to induce one or more plasma sparks 118. The laser-based system 102 emits pulsed or non-pulsed / continuous laser light according to a designated pulse- frequency / time interval to generate one or more plasma sparks that have individual positions in the air relative to the aircraft 100 and/or relative to other plasma sparks. Further, in examples where the laser-based system 102 generates a plurality of plasma sparks, a collective orientation of the plurality of plasma sparks 118 relative to the aircraft 100 or to other plasma sparks 118 is tracked by a sensor system 304 (shown in FIG. 3).

In an example, the laser-based system 102 is positioned ahead of the wings 108, 110 and proximate to the nose 114 of the aircraft so that the one or more plasma sparks 118 interact with airflow around the aircraft 100 before the airflow is affected by the wings 108, 110 and/or other control surfaces of the aircraft 100. Also, note that, in some examples, the one or more plasma sparks 118 are generated beyond a boundary layer that surrounds the aircraft 100. In this way, the one or more plasma sparks 118 are positioned to interact with the airflow that is not affected by the boundary layer in order to accurately characterize the behavior of localized airflow around the aircraft 100 and accurately calculate the fluid data of the aircraft 100. In other examples, the one or more plasma sparks 118 can be positioned in the boundary layer to measure characteristics of the boundary layer.

The laser-based system 102 is configured to detect one or more properties of the one or more plasma sparks 118 via the sensor system 304 (shown in FIG. 3). For example, the one or more properties can include individual positions of each plasma spark of the one or more plasma sparks 118, a size of plasma spark of the one or more plasma sparks 118, an orientation of the one or more plasma sparks 118 relative to the aircraft 100 or other plasma sparks, among other properties. The laser-based system 102 is configured to calculate fluid data 338 (shown in FIG. 3) of the aircraft 100 based at least on sensor data received from the sensor system 304.

In some examples, the fluid data 338 includes an angle of attack of the aircraft 100, which can be calculated based at least on the orientation of the one or more plasma sparks 118 relative to the aircraft 100. In some examples, the fluid data 338 includes a velocity of the aircraft 100, which can be calculated based at least on changes in position of the one or more plasma sparks 118 relative to the aircraft 100 or relative to other plasma sparks over a designated time duration. In some examples, the fluid data 338 includes a characterization of airflow outside of the aircraft 100. More particularly, the characterization of airflow outside of the aircraft 100 may include characterizations of side-slip, vortices, laminar flow, turbulent flow, unusual perturbations, and windshear, among other examples.

The laser-based system 102 is configured to output the fluid data 338 of the aircraft. For example, the laser-based system 102 may be configured to output the fluid data 338 to a flight deck control interface 346 (shown in FIG. 3) in a cockpit 120 of the aircraft 100 to alert a pilot of the fluid data 338. That way, the pilot may be informed of the fluid data 338 and can make suitable adjustments to flight of the aircraft 100 based at least on the fluid data 338.

In the illustrated embodiment, the laser-based system 102 is positioned proximate to the nose 114 of the aircraft 100. In some embodiments, the laser-based system 102 can be positioned on other areas of the aircraft 100, such as on the wings 108, 110 or the tail assembly 112. In some embodiments, multiple laser-based systems are positioned at different locations of the aircraft 100 in order to calculate fluid data 338 that is localized to those different areas of the aircraft 100. Moreover, by employing multiple laser-based systems on the aircraft 100, the fluid data 338 calculated by each of the laser-based systems can be compared to one another in order to verify the different calculations and increase the overall robustness of laser-based systems.

In the illustrated embodiment, the laser-based system 102 is configured to measure fluid data 338 of the aircraft 100. However, the concepts disclosed herein are broadly applicable to other types of vehicles. In some embodiments, the laser-based system is employed in an automobile. In some embodiments, the laser-based system is employed in a maritime vehicle, such as a boat or a submarine. The laser-based system may be employed in any suitable type of vehicle that operates in a medium in which laser light achieves optical breakdown of the medium to generate the one or more plasma sparks.

FIG. 3 shows a schematic block diagram of an example laser-based system 300 for measuring fluid data 338 of a vehicle. For example, the laser-based system 300 may correspond to the laser-based system 102 shown in FIGS. 1 and 2 that is configured to measure fluid data 338 of the aircraft 100. The laser-based system 300 comprises one or more lasers 302, a sensor system 304, and a computing system 306. The laser-based system 300 is positioned within a frame 308 of the vehicle. In some embodiments, the laser-based system 300 is flush mounted against the frame 308. In some embodiments, various components of the laser-based system 300 are contained in a housing that attaches to the frame 308.

The laser-based system 300 includes a window 310 positioned in the frame 308 of the vehicle. The laser(s) 302 are positioned to emit continuous or pulsed laser light 312 through the window 310 into a medium 314 outside of the vehicle. In an example where the vehicle is an aircraft, the medium comprises air outside of the aircraft. In other examples where the vehicle is a maritime vehicle, such as a submarine, the medium comprises water.

In some embodiments, the window 310 is treated to maintain transmissivity across varying environmental conditions. In some embodiments, the window 310 includes an anti-fog coating.

In some embodiments, the window 310 includes a coating to prevent ice accretion on the window 310. In some embodiments, the window 310 includes a surface coating that is slippery to prevent insects from crawling on or becoming affixed to the window 310. In some embodiments, the window 310 includes wiper blades or other mechanical adaptations on the inside or outside of the window to clear the window of any debris.

The laser(s) 302 are configured to emit the laser light 312 into the medium 314 outside of the vehicle to induce a one or more plasma sparks 316 in the medium 314. More particularly, the laser(s) 302 are controlled to emit continuous or pulsed laser light at a designated power level and for a designated duration to achieve optical breakdown of the medium in which molecules of the medium break apart to create a glowing plasma spark. For example, for 1-picosecond pulses an optical intensity of ≈ 2 × 10¹³ Watts/centimeters² is required for optical breakdown in air at normal pressure. The threshold intensity often scales with the inverse square root of the laser pulse duration.

In some examples, the laser(s) 302 comprise Q-switched lasers that emit laser light for nanosecond durations. In other examples, the laser(s) 302 comprise mode-locked lasers that are configured to emit laser light that is amplified in a regenerative amplifier for pulse durations of picoseconds or femtoseconds. In still other examples, the laser(s) 302 comprise a different type of laser that is configured to emit laser light at a designated power level and for a designated duration to achieve optical breakdown of the medium to generate the one or more plasma sparks 316.

The laser(s) 302 are configured to emit the laser light 312 repeatedly at a designated time interval to generate the one or more plasma sparks 316. In the illustrated example, the plasma spark generated at time interval T₃ corresponds to three time intervals prior to the current time. The plasma spark generated at time interval T₂ corresponds to two time intervals prior to the current time. The plasma spark generated at time interval T₁ corresponds to one time interval prior to the current time. The plasma spark generated at time interval T₀ corresponds to the current time. The laser(s) 302 can be controlled to emit the laser light 312 according to any suitable time interval.

When the vehicle is moving, the plasma sparks 316 move individually relative to the vehicle based on the velocity of the vehicle and flow of the medium 314 outside of the vehicle. In the example of the aircraft, the one or more plasma sparks 316 are spaced apart relative to each other and relative to the aircraft based at least on the velocity of the aircraft and the airflow conditions outside of the aircraft.

In some embodiments, the laser(s) 302 can be controlled to adjust the pulse-frequency / time interval based at least on one or more operating conditions of the vehicle. For example, the pulse-frequency / time interval can be adjusted based at least on the velocity of the vehicle. In some examples, the pulse-frequency can be increased as the velocity of the vehicle increases, and the pulse-frequency can be decreased as the velocity of the vehicle decreases in order to maintain accurate calculations of the fluid data 338 based at least on one or more properties of the one or more plasma sparks 316 as operating conditions of the vehicle change. In other embodiments, the pulse-frequency / time intervals of the laser(s) 302 are fixed.

In some embodiments, the laser(s) 302 are configured to emit the laser light 312 at a focal length that is set to generate the one or more plasma sparks 316 at a designated distance (D) from the vehicle that is beyond a boundary layer 318 that is in immediate contact with the surface of the vehicle. In examples where the vehicle is traveling through a medium that is air, within the boundary layer 318, the velocity of the air changes from zero (e.g., at the surface of the vehicle, due to a no-slip condition) to nearly a free-stream velocity of the surrounding air away from the surface of the vehicle. By positioning the one or more plasma sparks 316 beyond the boundary layer 318, the one or more plasma sparks 316 can accurately characterize the behavior of the airflow without it being affected by travel of the vehicle and the changes in airflow surrounding the vehicle in the boundary layer.

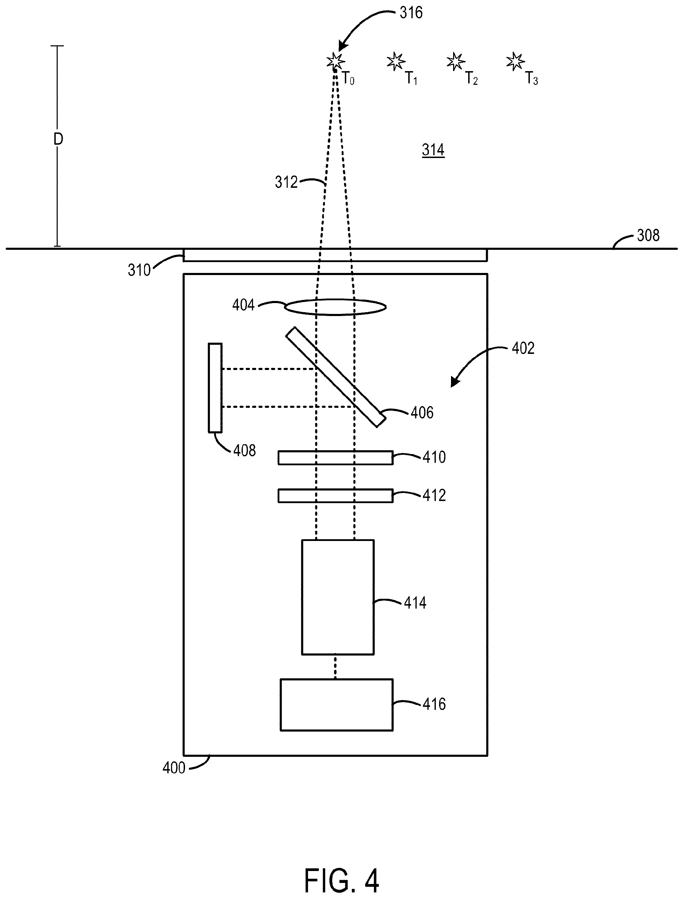

In some embodiments, the laser-based system 300 includes a single laser 302 that is configured to emit the laser light 312 to induce the one or more plasma sparks 316 in the medium 314. FIG. 4 shows a schematic block diagram of a single laser 400 that can be employed in a laser-based system for measuring fluid data 338 of a vehicle, such as the laser-based system 300 shown in FIG. 3. The laser 400 is positioned within the frame 308 of the vehicle in alignment with the window 310 that is positioned in the frame 308. The laser 400 is positioned to emit pulsed laser light 312 through the window 310 to the medium 314 outside of the vehicle.

The laser 400 comprises an optical stack 402 that includes an adjustable lens 404, a beam sampler 406, an energy meter 408, a variable attenuator 410, a shutter 412, a laser light source 414, and a power source 416. The adjustable lens 404 can be adjusted to adjust a focal distance of the laser light 312 emitted by the laser 400. The computing system 306 (shown in FIG. 3) is configured to send control signals to the laser 400 to adjust the focal distance of the laser light 312 via the adjustable lens 404. In some examples, the computing system 306 can adjust the focal distance of the laser light 312 based on various operating conditions, as will be discussed in further detail herein.

The beam sampler 406 is configured to divert a portion of the laser light 312 to the energy meter 408 for analysis, monitoring, and/or measurement purposes. The amount of laser light diverted to the energy meter 408 is minimal, i.e., it does not disturb the propagation or intensity of the primary laser beam / laser light 312 emitted by the laser 400.

The energy meter 408 is configured to measure the energy output of the laser light 312 emitted by the laser 400 based at least on the portion of laser light diverted by the beam sampler 406. The energy meter 408 is configured to output laser data 320 to the computing system 306 (shown in FIG. 3). The computing system 306 is configured to send control signals to the laser 400 causing the laser 400 to adjust one or more operating parameters of the laser 400 based at least on the laser data 320 and/or the fluid data 338 of the vehicle. In some examples, the operating parameters(s) of the laser 400 is adjusted to achieve a desired power level of the emitted laser light 312 emitted by the laser 400. In other examples, the operating parameters(s) of the laser 400 is adjusted to achieve a desired focal distance (D) at which the one or more plasma sparks 316 are generated. In still other examples, the operating parameters(s) of the laser 400 is adjusted to achieve a desired pulse-frequency / time interval at which the one or more plasma sparks 316 are generated. Any suitable operating parameter(s) of the laser 400 can be adjusted to achieve a desired placement of the one or more plasma sparks 316 relative to the vehicle.

The variable attenuator 410 is configured to variably control a reduction of the power or intensity of the laser light source 414 to a desired power level of the laser light 312 eventually output by the laser 400. The variable attenuator 410 is able to adjust the output power of the laser light 312 without altering its other characteristics, such as wavelength or beam quality. The shutter 412 is configured to control the passage of the laser light emitted from the laser light source 414. More particularly, the shutter 412 can act as an on/off switch for the laser light. The shutter 412 is controllable by the computing system 306 (shown in FIG. 3). The shutter 412 is switchable to block or allow the laser light to pass through the shutter 412, providing precise control over when the laser 400 is active. For example, the shutter 412 can be closed when the laser 400 is not activated. In an example in which the vehicle is an aircraft, the shutter 412 can be closed while the aircraft is on the ground to prevent the laser 400 from incidentally emitting laser light while the aircraft is not in flight.

The laser light source 414 is configured to emit laser light based at least on being powered by the power source 416. In some examples, the laser light source 414 is configured to emit laser light at high peak intensity to generate the one or more plasma sparks 316. In other examples, the laser light source 414 is configured to emit a different type of laser light to generate the one or more plasma sparks.

The power source 416 is configured to provide the laser light source 414 with electrical energy to excite a laser medium of the laser light source 414 to excite the atoms or molecules within the medium to higher energy states in a process known as "pumping." The pumping of the laser medium allows the laser light source 414 to generate and sustain coherent light output. The power source 416 may be configured to provide a continuous or pulsed energy supply to sustain laser operation. For continuous-wave type lasers, the power source 416 is configured to provide a steady input, while for pulsed lasers, it supplies energy in bursts.

The laser 400 is provided as one example configuration of a laser that can be employed in the laser-based system 300 for measuring fluid data of a vehicle. In some embodiments, one or more of the components of the optical stack 402 of the laser 400 may be omitted or swapped out for a different component. In other embodiments, a different type of laser configuration can be employed.

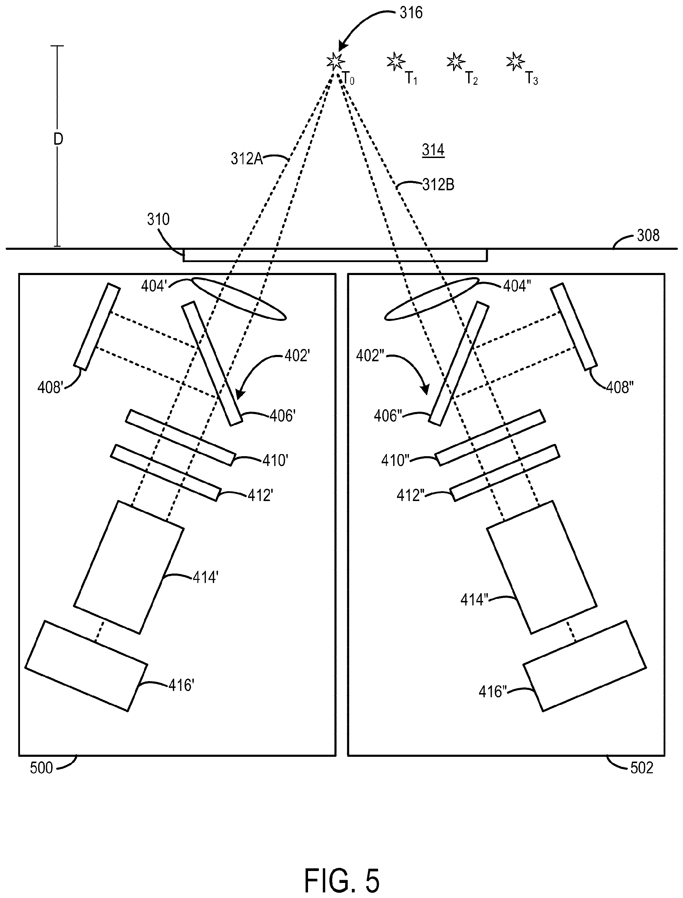

In some embodiments, the laser-based system 300 includes a plurality of lasers that are configured to collectively emit the laser light 312 to induce the one or more plasma sparks 316 in the medium 314. FIG. 5 shows a schematic block diagram of a plurality of lasers 500, 502, that can be employed in a laser-based system for measuring fluid data of a vehicle, such as the laser-based system 300 shown in FIG. 3. In some embodiments, components of each of the lasers 500, 502, that may be substantially the same as those of the laser 400 shown in FIG. 4, are identified in the same way and are described no further. The first laser 500 includes components corresponding to the components of the laser 400 shown in FIG. 4 and are indicated by the symbol (') after the element number (e.g., element 404 in FIG. 4 is equivalent to element 404' in FIG. 5. The second laser 502 includes components corresponding to the components of the laser 400 shown in FIG. 4 and are indicated by the symbol (") after the element number (e.g., element 404 in FIG. 4 is equivalent to element 404" in FIG. 5. However, it will be noted that components of the lasers 500, 502 may be at least partially different in different embodiments of the present disclosure. In some embodiments, the lasers 500 and 502 may be different types of lasers.

Each of the plurality of lasers 500, 502 is positioned within the frame 308 of the vehicle in alignment with the window 310 that is positioned in the frame 308. The lasers 500, 502 are positioned to emit laser light 312A, 312B through the window 310 to the medium 314 outside of the vehicle. Each of the laser light 312A, 312B is directed to the same focal point at the same focal distance (D) relative to the vehicle to generate the one or more plasma sparks 316. The power of the lasers 500, 502 are set / adjusted to collectively provide a designated total power to generate the one or more plasma sparks 316. By employing multiple lasers that collectively provide the laser light 312 to generate the one or more plasma sparks 316, the individual lasers may be smaller, lower power, and/or lower cost relative to a single larger laser. Moreover, the multiple lasers provide redundancy and better robustness relative to a single laser, because if one laser of the multiple lasers degrades or becomes inoperable, the other lasers can still be controlled to provide the laser light 312 to generate the one or more plasma sparks 316. This would not be possible if the laser in the single laser configuration were to degrade or become inoperable.

In the illustrated embodiment, two lasers collectively provide the laser light 312A, 312B to generate the one or more plasma sparks 316. In other embodiments, more than two lasers can be employed to collectively generate the laser light 312 to generate the one or more plasma sparks 316 (e.g., 3, 4, 5, or more lasers).

In general, the laser-based system 300 has been described as being configured to generate a single plasma spark at a time, and over a window of time, one or more plasma sparks is generated by a corresponding plurality of pulses of laser light. In other embodiments, the laser-based system 300 includes a plurality of lasers that are individually controlled by the computing system 306 to emit multiple pulses of laser light at the same time to generate a one or more plasma sparks at different positions relative to one another and relative to the vehicle. In some examples, the one or more plasma sparks generated at the same time are generated in a designated formation relative to each other. The one or more plasma sparks can be generated in any suitable formation that can be observed to determine fluid data of a vehicle.

Returning to FIG. 3, when the laser(s) 302 emit the laser light 312 to generate the one or more plasma sparks 316, the sensor system 304 is configured to detect one or more properties of the one or more plasma sparks 316. The sensor system 304 is configured to output sensor data 322 indicating the one or more properties of the one or more plasma sparks 316 to the computing system 306. In some examples, the one or more properties of the one or more plasma sparks 316 includes a position of each plasma spark of the one or more plasma sparks 316. In some examples, the one or more properties of the one or more plasma sparks 316 includes a size of each plasma spark of the one or more plasma sparks 316. In some examples, the one or more properties of the one or more plasma sparks 316 includes an intensity or brightness of each plasma spark of the one or more plasma sparks 316. In some examples, the one or more properties of the one or more plasma sparks 316 includes an orientation of the one or more plasma sparks 316 relative to the vehicle and/or relative to other plasma sparks. In some examples, the one or more properties of the one or more plasma sparks 316 includes identifying a formation of the one or more plasma sparks 316 relative to each other and/or the vehicle.

In some embodiments, the sensor system 304 comprises a camera 324 configured to acquire a plurality of images of the one or more plasma sparks 316. More particularly, a field of view (FOV) 326 of the camera 324 is positioned to observe the one or more plasma sparks 316 through the window 310 and capture images of the one or more plasma sparks 316. The camera 324 is configured to output image data 328 corresponding to the plurality of images to the computing system 306. The camera 324 can be any suitable type of camera that can capture images of the one or more plasma sparks 316. In some examples, the camera is a visible light camera. In other examples, the camera is an infrared or near-infrared camera. In some examples, the camera is a hyperspectral camera. In some embodiments, multiple cameras are employed to observe the one or more plasma sparks 316. For example, different cameras may be used for different operating conditions, such as using an IR camera in cloudy or low light conditions and using a visible light camera during bright ambient light conditions.

In other embodiments, the sensor system 304 comprises a radar subsystem 330 configured to emit radar waves toward the one or more plasma sparks 316 and detect reflected radar waves that reflect back from the one or more plasma sparks 316. The radar subsystem 330 is configured to output radar data 332 corresponding to the reflected radar waves to the computing system 306.

In some embodiments, the sensor system 304 includes additional sensors that output sensor data 322 to the computing system 306.

The computing system 306 comprises a logic subsystem 334 and a storage subsystem 336 holding instructions executable by the logic subsystem 334 to perform various computing operations that facilitate measuring fluid data of the vehicle. In one example, the storage subsystem 336 holds instructions executable by the logic subsystem 334 to send control signals to the laser(s) 302 causing the laser laser(s) 302 to emit the laser light 312 into the medium 314 outside of the vehicle to induce the one or more plasma sparks 316 in the medium 314.

In embodiments where the laser-based system 300 comprises a first and second laser, the storage subsystem 336 holds instructions executable by the logic subsystem 334 to send control signals to the first laser and the second laser causing the first laser and the second laser to emit the laser light 312 into the medium 314 outside of the vehicle. The first laser and the second laser are configured such that laser light 312 emitted from the first laser and the second laser collectively induces the one or more plasma sparks 316 in the medium 314.

The storage subsystem 336 holds instructions executable by the logic subsystem 334 to receive from the sensor system 304, sensor data 322 indicating one or more properties of the one or more plasma sparks 316 detected by the sensor system 304. In one example, the one or more properties of the one or more plasma sparks 316 includes an orientation of the one or more plasma sparks 316 relative to the vehicle. In some examples, the orientation of the one or more plasma sparks 316 is a three-dimensional orientation of the one or more plasma sparks 316 relative to the vehicle. In other examples, the orientation of the one or more plasma sparks 316 is a two-dimensional orientation of the one or more plasma sparks 316 relative to the vehicle. In another example, the one or more properties of the one or more plasma sparks 316 includes a three-dimensional position of each of the plasma sparks relative to one another. In yet another example, the one or more properties of the one or more plasma sparks 316 includes a distance of the one or more plasma sparks 316 relative to the vehicle.

In embodiments where the sensor system 304 includes the camera 324, the computing system 306 receives the image data 328 as sensor data. In embodiments where the sensor system 304 includes the radar subsystem 330, the computing system 306 receive the radar data 332 as sensor data.

The storage subsystem 336 holds instructions executable by the logic subsystem 334 to calculate the fluid data 338 of the vehicle based at least on the sensor data 322. In some embodiments, the fluid data 338 of the vehicle is calculated in real-time based at least on the sensor data 322. In embodiments where the sensor system 304 includes the camera 324, the storage subsystem 336 holds instructions executable by the logic subsystem 334 to calculate the fluid data 338 of the vehicle based at least on the image data 328. In embodiments where the sensor system 304 includes the radar subsystem 330, the storage subsystem 336 holds instructions executable by the logic subsystem 334 to calculate the fluid data 338 of the vehicle based at least on the radar data 332.

In some embodiments, the fluid data 338 is calculated based at least on the orientation of the one or more plasma sparks 316 relative to the vehicle. In some examples, the fluid data 338 includes an angle of attack 340 of the vehicle that is calculated based at least on the orientation of the one or more plasma sparks 316 relative to the vehicle.

In some examples, the fluid data 338 includes a velocity 342 of the vehicle. The velocity 342 of the vehicle can be calculated based at least on changes in position of the one or more plasma sparks 316 relative to the vehicle over time. More particularly, in embodiments where the vehicle is an aircraft, the fluid data 338 can include vertical airspeed (rate of climb or descent) of the aircraft.

In some examples, the fluid data 338 includes a characterization of airflow 344 outside of the vehicle. For example, the characterization of airflow 344 can include side-slip, vortices, laminar flow, turbulent flow, unusual perturbations, and/or windshear. These different characterizations of the airflow 344 can be calculated based at least on the orientation of the one or more plasma sparks 316 relative to each other as well as movement of the one or more plasma sparks 316 over time.

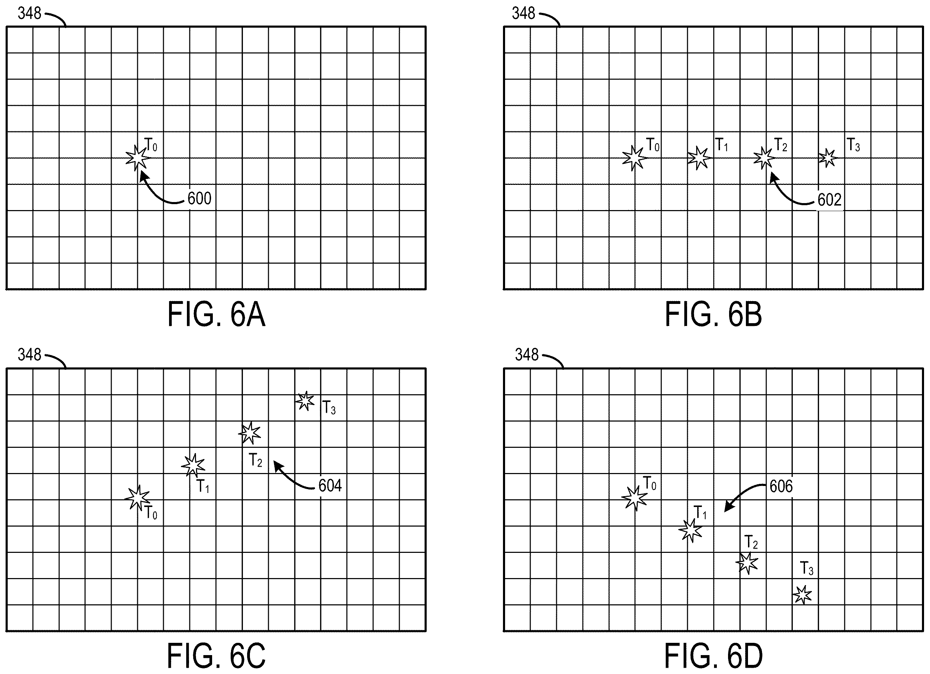

The storage subsystem 336 holds instructions executable by the logic subsystem 334 to output the fluid data 338 of the vehicle. The fluid data 338 can be output to any suitable source. In some embodiments, the fluid data 338 is output to the storage subsystem 336 of the computing system 306. The fluid data 338 can be used for downstream processing or feedback control of the vehicle. In some embodiments where the vehicle is an aircraft, the fluid data 338 is output to a flight deck control interface 346, such as an instrument panel or gauge cluster. In some examples, the flight deck control interface 346 includes a display 348 and the storage subsystem 336 holds instructions executable by the logic subsystem 334 to send control signals to the display 348 causing the display 348 to display a visual representation of fluid data 338. In some embodiments, the storage subsystem 336 holds instructions executable by the logic subsystem 334 to send control signals to the display 348 causing the display 348 to display a visual representation of plurality of the plasma sparks and/or a visual representation of the fluid data. In some embodiments, the display 348 display images captured by the camera 324. In other embodiments, the display 348 displays graphical representations of the one or more plasma sparks 316 generated based at least on sensor data 322 received from the sensor system 304. FIGS. 6A-6D show example visual representations of plasma sparks in different orientations that can be displayed via a display, such as the display 348 shown in FIG. 3. In the illustrated examples, the plasma sparks are generated by an aircraft. In other examples, the plasma sparks may be generated by a different vehicle.

FIG. 6A shows an example scenario in which the display 348 displays a visual representation of a single plasma spark 600 generated at a current time T₀. For example, the single plasma spark 600 can be generated in a test mode to test the functionality of the laser-based system 300 in flight, or while the aircraft is on the ground in a stationary position.

FIG. 6B shows an example scenario in which the display 348 displays a visual representation of a one or more plasma sparks 602 generated during a time window ranging from T₃ to T₀ (the current time). The one or more plasma sparks 602 are spaced apart from one another and from the aircraft due to flight of the aircraft. That is, the plasma sparks travel in the airflow away from the aircraft as the aircraft flies through air. In the illustrated example, the orientation of the one or more plasma sparks 602 is level relative to the aircraft indicating an angle of attack = 0°.

FIG. 6C shows an example scenario in which the display 348 displays a visual representation of a one or more plasma sparks 604 generated during a time window ranging from T₃ to T₀ (the current time). The one or more plasma sparks 604 are spaced apart from one another and from the aircraft due to flight of the aircraft. That is, the plasma sparks travel in the airflow away from the aircraft as the aircraft flies through air. In the illustrated example, the orientation of the one or more plasma sparks 604 is pitched upward relative to a primary axis of the aircraft indicating a negative angle of attack (e.g., -30°).

FIG. 6D shows an example scenario in which the display 348 displays a visual representation of a one or more plasma sparks 606 generated during a time window ranging from T₃ to T₀ (the current time). The one or more plasma sparks 606 are spaced apart from one another and from the aircraft due to flight of the aircraft. That is, the plasma sparks travel in the airflow away from the aircraft as the aircraft flies through air. In the illustrated example, the orientation of the one or more plasma sparks 604 is pitched downward relative to a primary axis of the aircraft indicating a positive angle of attack (e.g., +30°).

The visual representation shown in FIGS. 6A-6D are provided as non-limiting examples. Properties of the one or more plasma sparks can be visually represented in any suitable form. In some embodiments, fluid data 338 is displayed via the display 348 in addition to the one or more plasma sparks.

Returning to FIG. 3, in some embodiments, the laser-based system 300 includes a heating system 350 that is connected to the window 310. The heating system 350 can be activated to prevent fog, condensation, and/or ice accretion from forming on the window 310. The storage subsystem 336 holds instructions executable by the logic subsystem 334 to send control signals to the heating system 350 causing the heating system 350 to heat the window 310 to reduce the amount of fog, condensation, and/or ice formation on the window 310. In some embodiments, the computing system 306 adjusts control of the heating system 350 based on environmental parameters of the vehicle as indicated by sensor data 322 received from the sensor system 304. In one example, the computing system 306 is configured to activate the heating system 350 based at least on the ambient temperature outside of the vehicle being less than a threshold temperature. In another example, the computing system 306 is configured to activate the heating system 350 based at least on an altitude of the vehicle being greater than a threshold altitude. In some embodiments, another mechanism may be employed to prevent fog, condensation, and/or ice accretion from forming on the window 310. For example, a fan may be positioned proximate to the window 310 to direct airflow onto the window 310 in order to provide defrost functionality.

In some embodiments, the computing system 306 is configured to adjust various operating parameters of the laser-based system 300 based at least on the sensor data 322 and/or the fluid data 338. In some embodiments, the computing system 306 is configured to adjust operation of the laser(s) 302 based at least on the sensor data 322 and/or the fluid data 338. In one example, the storage subsystem 336 holds instructions executable by the logic subsystem 334 to send control signals to the laser(s) 302 causing the laser(s) 302 to adjust a power or intensity level of the laser light 312 emitted by the laser based at least on the sensor data 322 and/or the fluid data 338. For example, laser-induced breakdown of air to generate plasma sparks is dependent on air pressure. More particularly, as air pressure increases, the threshold power or intensity level of laser light to induce plasma sparks decreases. Accordingly, the power or intensity levels of the laser(s) 302 are adjusted based at least on air pressure, in some examples.

In another example, the storage subsystem 336 holds instructions executable by the logic subsystem 334 to send control signals to the laser(s) 302 causing the laser(s) 302 to adjust the designated distance (D) at which the one or more plasma sparks 316 are generated relative to the vehicle based at least on operating conditions of vehicle. In some examples, the designated distance (D) at which the one or more plasma sparks 316 are generated relative to the vehicle are adjusted based at least on a level of visibility outside of the vehicle. For example, the designated distance (D) at which the one or more plasma sparks 316 are generated can be reduced when the vehicle is traveling in cloudy conditions (e.g., flying through a cloud) relative to when the vehicle is traveling in clear conditions.

In other examples, the storage subsystem 336 holds instructions executable by the logic subsystem 334 to calculate a size of a boundary layer surround the vehicle based at least on the sensor data 322 and/or the fluid data 338, and send control signals to the laser(s) 302 causing the laser(s) 302 to adjust the designated distance (D) at which the one or more plasma sparks 316 are generated relative to the vehicle to beyond the boundary layer outside of the vehicle. In yet another example, the storage subsystem 336 holds instructions executable by the logic subsystem 334 to send control signals to the laser(s) 302 causing the laser(s) 302 to adjust the frequency / pulse rate at which the laser light 312 is emitted from the laser(s) 302 based at least on the sensor data 322 and/or the fluid data 338. For example, the frequency / pulse rate can be increased as the velocity of the vehicle increases and vice versa.

In other examples, the sensor system 304 and/or the heating system 350 can be adjusted based at least on the sensor data 322 and/or the fluid data 338 to account for varying environmental conditions in order to maintain accurate calculations of the fluid data 338 of the vehicle based at least on observing, monitoring, or measuring behavior of the one or more plasma sparks 316.

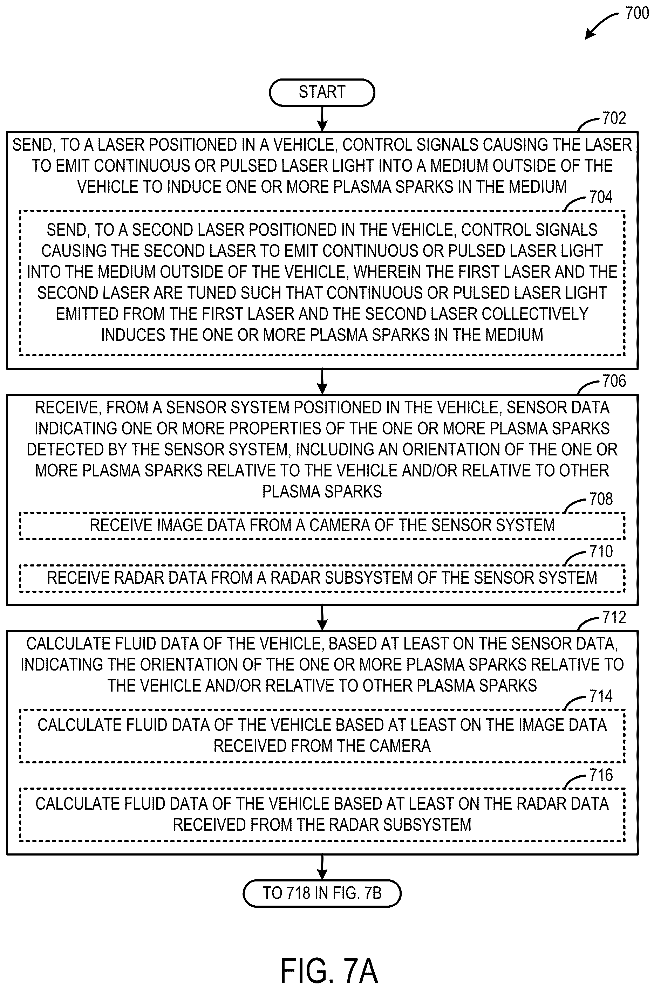

FIGS. 7A-7B show an example method of measuring fluid data of a vehicle. For example, the method 700 may be performed by the laser-based system 102 shown in FIGS. 1 and 2 and the laser-based system 300 shown in FIG. 3. Note that method steps indicated in dotted lines optionally may be performed in some embodiments.

In FIG. 7A, at 702, the method 700 includes sending, to a laser positioned in a vehicle, control signals causing the laser to emit continuous or pulsed laser light into a medium outside of the vehicle to induce a one or more plasma sparks in the medium.

In some embodiments where the laser-based system includes two lasers, at 704, the method 700 may include sending, to a second laser positioned in the vehicle, control signals causing the second laser to emit continuous or pulsed laser light into the medium outside of the vehicle. In such embodiments, the first laser and the second laser are configured such that the continuous or pulsed laser light emitted from the first laser and the second laser collectively induces the one or more plasma sparks in the medium.

At 706, the method 700 includes receiving, from a sensor system positioned in the vehicle, sensor data indicating one or more properties of the one or more plasma sparks detected by the sensor system, including an orientation of the one or more plasma sparks relative to the vehicle and/or relative to other plasma sparks.

In some embodiments where the sensor system includes a camera, at 708, the method 700 may include receiving image data from the camera. The image data corresponds to images of the one or more plasma sparks.

In some embodiments where the sensor system includes a radar subsystem, at 710, the method 700 may include receiving radar data from the radar subsystem. The radar data corresponds to radar waves reflected back from the one or more plasma sparks.

At 712, the method 700 includes calculating fluid data of the vehicle, based at least on the sensor data, indicating the orientation of the one or more plasma sparks relative to the vehicle. In some examples, the fluid data includes an angle of attack of the vehicle. In other examples, the fluid data includes a velocity of the vehicle. In still other examples, the fluid data includes a characterization of airflow outside of the vehicle.

In some embodiments where the sensor system includes the camera, at 714, the method 700 may include calculating the fluid data based at least on the image data.

In some embodiments where the sensor system includes the radar subsystem, at 716, the method 700 may include calculating the fluid data based at least on the radar data.

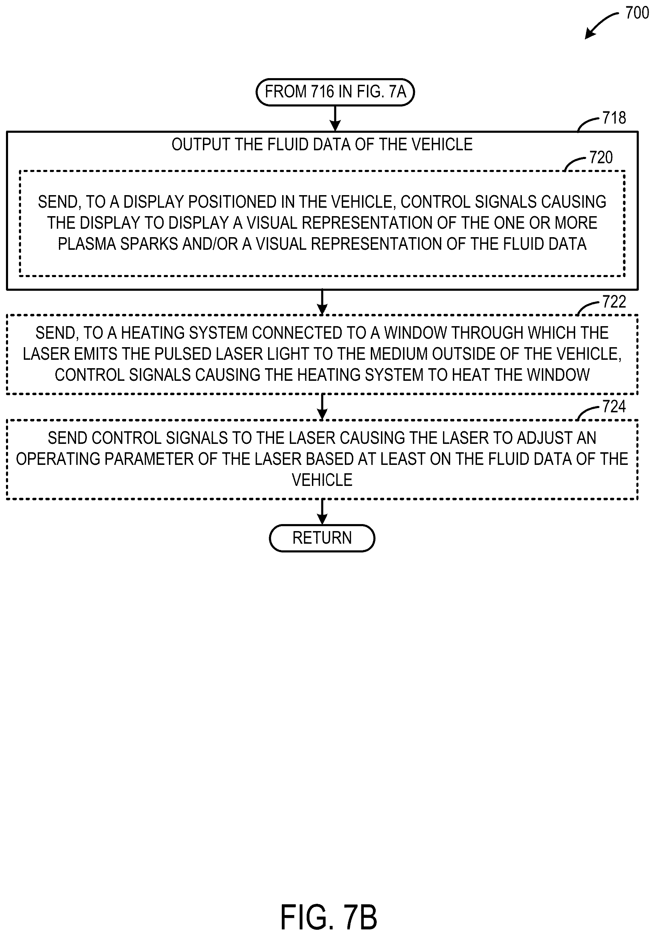

In FIG. 7B, at 718, the method 700 includes outputting the fluid data of the vehicle.

In some embodiments, at 720, the method 700 may include sending, to a display positioned in the vehicle, control signals causing the display to display a visual representation of the plurality of the plasma sparks and/or a visual representation of the fluid data.

In some embodiments where a heating system is connected to the window through which the laser emits the laser light to the medium outside of the vehicle, at 722, the method 700 may include sending, to the heating system, control signals causing the heating system to heat the window. By heating the window, fog, condensation, and/or ice accretion on the window can be reduced.

In some embodiments, at 724, the method 700 may include sending control signals to the laser causing the laser to adjust an operating parameter of the laser based at least on the fluid data of the vehicle. In some examples, a power or intensity level is adjusted based at least on the fluid data of the vehicle. In some examples, a distance at which the one or more plasma sparks is generated relative to the vehicle and/or relative to other plasma sparks is adjusted based at least on the fluid data. In some examples, a pulse-frequency / time interval at which the one or more plasma sparks is generated based at least on the fluid data.

The method 700 may be performed repeatedly to provide real-time fluid data of the vehicle based at least on observing, monitoring, or measuring the behavior of the one or more plasma sparks in the medium outside the vehicle. Moreover, the method 700 may be performed for any suitable number of different laser-based systems deployed at different locations on a vehicle to provide localized fluid data. The method 700 leverages the observed behavior of the one or more plasma sparks in the medium to calculate different types of environmental parameters represented as fluid data. The plasma sparks are generated due to a breakdown of the medium in which the laser light is emitted from the laser. This allows for the plasma sparks to be observable without having to seed the medium with any specific material, which is the case when employing LiDAR technology. Moreover, in some examples, the plasma sparks are visible to the human eye. This allows for the laser-based sensor system to be easily tested for functionality via visual confirmation of the plasma sparks being generated outside of the vehicle. In the example of the aircraft, the laser-based system can be tested via visual confirmation of the plasma sparks either from the ground pre-flight, from the cockpit during flight, or on a display in the cockpit of the aircraft.

The one or more plasma sparks can be generated by a low-power laser that consumes a relatively small amount of energy that may be comparable or even less than the amount of energy consumed by a conventional mechanical sensor. Moreover, the laser light emitted by the laser to generate the plasma sparks has an amount of energy that is suitably low enough so as not to be harmful to humans or the environment.

Furthermore, the one or more plasma sparks can be generated without requiring any components being positioned outside of the vehicle, which reduces drag of the vehicle relative to a vehicle that employs a conventional mechanical sensor that includes an external probe (e.g., a conventional mechanical AoA sensor). Moreover, the reduced drag results in reduced fuel consumption of the vehicle relative to a vehicle that employs a conventional mechanical sensor. Additionally, the one or more plasma sparks can be generated in a manner that requires less maintenance and has fewer failure modes than a conventional mechanical sensor.

The method 700 can be performed to measure fluid data of any suitable vehicle that travels through a medium that can be broken down by laser light to generate plasma sparks. This includes aircraft, automobiles, and maritime vehicles, such as boats and submarines, among other vehicles.

The methods and processes described herein can be tied to a computing system of one or more computing devices. In particular, such methods and processes can be implemented as an executable computer-application program, a network-accessible computing service, an application-programming interface (API), a library, or a combination of the above and/or other computing resources.

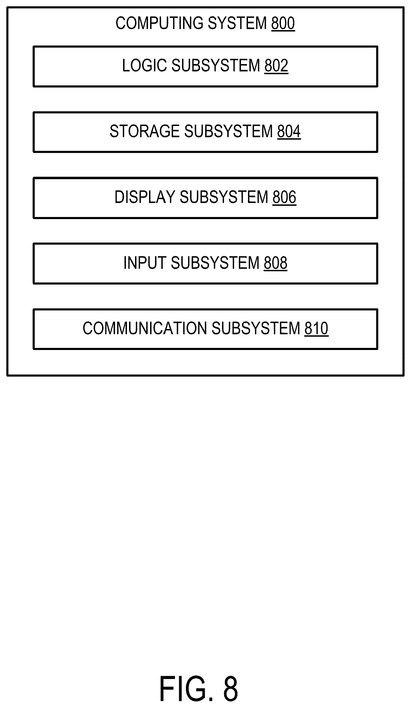

FIG. 8 schematically shows a simplified representation of a computing system 800 configured to provide any to all of the computing functionality described herein. Computing system 800 can take the form of one or more embedded controllers, personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices. For example, the computing system 800 can be representative of the computing system 306 of the laser-based system 300 shown in FIG. 3. The computing system 800 can be further representative of a computing system of the laser-based system 102 shown in FIGS. 1 and 2.

Computing system 800 includes a logic subsystem 802 and a storage subsystem 804. Computing system 800 can optionally include a display subsystem 806, input subsystem 808, communication subsystem 810, and/or other subsystems not shown in FIG. 8.

Logic subsystem 802 includes one or more physical devices configured to execute instructions. For example, the logic subsystem can be configured to execute instructions that are part of one or more applications, services, or other logical constructs. The logic subsystem can include one or more hardware processors configured to execute software instructions. Additionally, or alternatively, the logic subsystem can include one or more hardware or firmware devices configured to execute hardware or firmware instructions. Processors of the logic subsystem can be single-core or multi-core, and the instructions executed thereon can be configured for sequential, parallel, and/or distributed processing. Individual components of the logic subsystem optionally can be distributed among two or more separate devices, which can be remotely located and/or configured for coordinated processing. Aspects of the logic subsystem can be virtualized and executed by remotely-accessible, networked computing devices configured in a cloud-computing configuration.

Storage subsystem 804 includes one or more physical devices configured to temporarily and/or permanently hold computer information such as data and instructions executable by the logic subsystem. When the storage subsystem includes two or more devices, the devices can be collocated and/or remotely located. Storage subsystem 804 can include volatile, nonvolatile, dynamic, static, read/write, read-only, random-access, sequential-access, location-addressable, file-addressable, and/or content-addressable devices. Storage subsystem 804 can include removable and/or built-in devices. When the logic subsystem executes instructions, the state of storage subsystem 804 can be transformed - e.g., to hold different data.

Aspects of logic subsystem 802 and storage subsystem 804 can be integrated together into one or more hardware-logic components. Such hardware-logic components can include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem can cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine can be instantiated by a single computing device, or a machine can include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality can optionally be saved as one or more unexecuted modules on one or more suitable storage devices.

The terms "module," "program," and "engine" can be used to describe an aspect of computing system 800 typically implemented in software by a processor to perform a particular function using portions of volatile memory, which function involves transformative processing that specially configures the processor to perform the function. Thus, a module, program, or engine can be instantiated via the logic subsystem 802 executing instructions held by storage subsystem 804. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 806 can be used to present a visual representation of data held by storage subsystem 804. This visual representation can take the form of a graphical user interface (GUI). Display subsystem 806 can include one or more display devices utilizing virtually any type of technology. In some implementations, display subsystem can include one or more virtual-, augmented-, or mixed reality displays.

When included, input subsystem 808 can comprise or interface with one or more input devices. An input device can include a sensor device or a user input device. Examples of user input devices include a keyboard, mouse, touch screen, or game controller. In some embodiments, the input subsystem can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 810 can be configured to communicatively couple computing system 800 with one or more other computing devices. Communication subsystem 810 can include wired and/or wireless communication devices compatible with one or more different communication protocols. The communication subsystem can be configured for communication via personal-, local- and/or wide-area networks.

Further, the disclosure comprises configurations according to the following examples.

In an example, a system for measuring fluid data of a vehicle comprises a laser positioned in, on, or attached to the vehicle and configured to emit laser light into a medium outside of the vehicle to induce a one or more plasma sparks in the medium, a sensor system positioned in, on, or attached to the vehicle and configured to detect one or more properties of the one or more plasma sparks, including an orientation of the one or more plasma sparks relative to the vehicle and/or relative to other plasma sparks, and a computing system positioned in, on, or attached to the vehicle and comprising a logic subsystem and a storage subsystem holding instructions executable by the logic subsystem to send control signals to the laser causing the laser to emit the laser light into the medium outside of the vehicle to induce the one or more plasma sparks in the medium, receive, from the sensor system, sensor data indicating one or more properties of the one or more plasma sparks detected by the sensor system, including the orientation of the one or more plasma sparks relative to the vehicle and/or relative to other plasma sparks, calculate the fluid data of the vehicle based at least on the sensor data, indicating the orientation of the one or more plasma sparks relative to the vehicle and/or relative to other plasma sparks, and output the fluid data of the vehicle. In this example and/or other examples, the fluid data may include an angle of attack of the vehicle. In this example and/or other examples, the fluid data may include a velocity of the vehicle. In this example and/or other examples, the fluid data may include a characterization of airflow outside of the vehicle. In this example and/or other examples, the storage subsystem may hold instructions executable by the logic subsystem to send control signals to the laser causing the laser to adjust an operating parameter of the laser based at least on the fluid data of the vehicle. In this example and/or other examples, said adjusting the operating parameter may include adjusting the position of the one or more plasma sparks beyond a boundary layer outside of the vehicle. In this example and/or other examples, the laser may be a first laser, and the system may further comprise a second laser positioned in, on, or attached to the vehicle and configured to emit laser light into the medium outside of the vehicle, and the storage subsystem may hold instructions executable by the logic subsystem to send control signals to the second laser causing the second laser to emit the laser light into the medium outside of the vehicle, wherein the first laser and the second laser are configured such that laser light emitted from the first laser and the second laser collectively induces the one or more plasma sparks in the medium. In this example and/or other examples, the system may further comprise a frame of the vehicle, a window positioned in the frame of the vehicle, wherein the laser is positioned to emit the laser light through the window to the medium outside of the vehicle, and a heating system connected to the window, and the storage subsystem may hold instructions executable by the logic subsystem to send control signals to the heating system causing the heating system to heat the window. In this example and/or other examples, the system may further comprise a display positioned in the vehicle, and the storage subsystem may hold instructions executable by the logic subsystem to send control signals to the display causing the display to display a visual representation of the plurality of the plasma sparks and/or a visual representation of the fluid data. In this example and/or other examples, the sensor system may comprise a camera configured to acquire a plurality of images of the one or more plasma sparks, and the storage subsystem may hold instructions executable by the logic subsystem to calculate the fluid data of the vehicle based at least on the plurality of images of the one or more plasma sparks. In this example and/or other examples, the sensor system may comprise a radar subsystem configured to emit radar waves toward the one or more plasma sparks and detect reflected radar waves that reflect back from the one or more plasma sparks, and the storage subsystem may hold instructions executable by the logic subsystem to calculate the fluid data of the vehicle based at least on the reflected radar waves.

In another example, a method of measuring fluid data of a vehicle, the method comprises sending, to a laser positioned in, on, or attached to the vehicle, control signals causing the laser to emit laser light into a medium outside of the vehicle to induce one or more plasma sparks in the medium, receiving, from a sensor system positioned in, on, or attached to the vehicle, sensor data indicating one or more properties of the one or more plasma sparks detected by the sensor system, including an orientation of the one or more plasma sparks relative to the vehicle and/or relative to other plasma sparks, calculating the fluid data of the vehicle based at least on the sensor data, indicating the orientation of the one or more plasma sparks relative to the vehicle and/or relative to other plasma sparks, and outputting the fluid data of the vehicle. In this example and/or other examples, the fluid data may include one or more of an angle of attack of the vehicle, a velocity of the vehicle, and a characterization of airflow outside of the vehicle. In this example and/or other examples, the method may further comprise sending control signals to the laser causing the laser to adjust an operating parameter of the laser based at least on the fluid data of the vehicle. In this example and/or other examples, the laser may be a first laser, and the method may further comprise sending, to a second laser positioned in, on, or attached to the vehicle, control signals causing the second laser to emit laser light into the medium outside of the vehicle, the first laser and the second laser may be configured such that laser light emitted from the first laser and the second laser collectively induces the one or more plasma sparks in the medium. In this example and/or other examples, the method may further comprise sending, to a heating system connected to a window positioned in a frame of the vehicle through which the laser emits the laser light to the medium outside of the vehicle, control signals causing the heating system to heat the window. In this example and/or other examples, the method may further comprise sending, to a display positioned in the vehicle, control signals causing the display to display a visual representation of the plurality of the plasma sparks and/or a visual representation of the fluid data.

In yet another example, a system for measuring fluid data of an aircraft comprises a laser positioned in, on, or attached to the aircraft and configured to emit laser light into air outside of the aircraft to induce a one or more plasma sparks in the air, a sensor system positioned in, on, or attached to the aircraft and configured to detect one or more properties of the one or more plasma sparks, including an orientation of the one or more plasma sparks relative to the aircraft, and a computing system positioned in, on, or attached to the aircraft and comprising a logic subsystem and a storage subsystem holding instructions executable by the logic subsystem to send control signals to the laser causing the laser to emit the laser light into the air outside of the aircraft to induce the one or more plasma sparks in the air, receive, from the sensor system, sensor data indicating one or more properties of the one or more plasma sparks detected by the sensor system, including the orientation of the one or more plasma sparks relative to the aircraft and/or relative to other plasma sparks, calculate the fluid data of the aircraft based at least on the sensor data, indicating the orientation of the one or more plasma sparks relative to the aircraft and/or relative to other plasma sparks, and output the fluid data of the aircraft. In this example and/or other examples, the fluid data may include one or more of an angle of attack of the aircraft, a velocity of the aircraft, and a characterization of airflow outside of the aircraft. In this example and/or other examples, the storage subsystem may hold instructions executable by the logic subsystem to send control signals to the laser causing the laser to adjust an operating parameter of the laser based at least on the fluid data of the aircraft.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof. Further, the disclosure comprises examples according to the following clauses:
Clause 1: A system for measuring fluid data of an aircraft, the system comprising:
   a laser positioned in, on, or attached to the aircraft and configured to emit laser light into air outside of the aircraft to induce a one or more plasma sparks in the air;
   a sensor system positioned in, on, or attached to the aircraft and configured to detect one or more properties of the one or more plasma sparks, including an orientation of the one or more plasma sparks relative to the aircraft; and
   a computing system positioned in, on, or attached to the aircraft and comprising a logic subsystem and a storage subsystem holding instructions executable by the logic subsystem to:
      send control signals to the laser causing the laser to emit the laser light into the air outside of the aircraft to induce the one or more plasma sparks in the air;
      receive, from the sensor system, sensor data indicating one or more properties of the one or more plasma sparks detected by the sensor system, including the orientation of the one or more plasma sparks relative to the aircraft and/or relative to other plasma sparks;
      calculate the fluid data of the aircraft based at least on the sensor data, indicating the orientation of the one or more plasma sparks relative to the aircraft and/or relative to other plasma sparks; and
      output the fluid data of the aircraft.
Clause 2. The system of clause 1, wherein the fluid data includes one or more of an angle of attack of the aircraft, a velocity of the aircraft, and a characterization of airflow outside of the aircraft.
Clause 3. The system of clause 1 or 2, wherein the storage subsystem holds instructions executable by the logic subsystem to:
   send control signals to the laser causing the laser to adjust an operating parameter of the laser based at least on the fluid data of the aircraft.

## Claims

1. A system (300) for measuring fluid data (338) of a vehicle (100), the system (300) comprising:
a laser (302) positioned in, on, or attached to the vehicle (100) and configured to emit laser light (312) into a medium (314) outside of the vehicle (100) to induce a one or more plasma sparks (316) in the medium (314);
a sensor system (304) positioned in, on, or attached to the vehicle (100) and configured to detect one or more properties of the one or more plasma sparks (316), including an orientation of the one or more plasma sparks (316) relative to the vehicle (100) and/or relative to other plasma sparks (316); and
a computing system (306) positioned in, on, or attached to the vehicle (100) and comprising a logic subsystem (334) and a storage subsystem (336) holding instructions executable by the logic subsystem (334) to:
send control signals (300) to the laser (302) causing the laser (302) to emit the laser light (312) into the medium (314) outside of the vehicle (100) to induce the one or more plasma sparks (316) in the medium (314);
receive, from the sensor system (304), sensor data (322) indicating one or more properties of the one or more plasma sparks (316) detected by the sensor system (304), including the orientation of the one or more plasma sparks (316) relative to the vehicle (100) and/or relative to other plasma sparks (316);
calculate the fluid data (338) of the vehicle (100) based at least on the sensor data (322), indicating the orientation of the one or more plasma sparks (316) relative to the vehicle (100) and/or relative to other plasma sparks (316; and
output the fluid data (338) of the vehicle (100).

2. The system (300) of claim 1, wherein the fluid data (338) includes one or more of an angle of attack (340) of the vehicle (100), a velocity (342) of the vehicle (100), or a characterization of airflow (344) outside of the vehicle (100).

3. The system (300) of claim 1 or 2, wherein the storage subsystem (336) holds instructions executable by the logic subsystem (334) to:
send control signals to the laser (302) causing the laser (302) to adjust an operating parameter of the laser (302) based at least on the fluid data (338) of the vehicle (100).

4. The system (300) of claim 3, wherein said adjusting the operating parameter includes adjusting the position of the one or more plasma sparks (316) beyond a boundary layer (318) outside of the vehicle (100).

5. The system (300) of any one of claims 1 to 4, wherein the laser (302) is a first laser (500), and wherein the system (300) further comprises:
a second laser (502) positioned in, on, or attached to the vehicle (100) and configured to emit laser light (312B) into the medium (314) outside of the vehicle (100); and
wherein the storage subsystem (336) holds instructions executable by the logic subsystem (334) to:
send control signals to the second laser (502) causing the second laser (502) to emit the laser light (312B) into the medium (314) outside of the vehicle (100), wherein the first laser (500) and the second laser (502) are configured such that laser light (312A, 312B) emitted from the first laser (500) and the second laser (502) collectively induces the one or more plasma sparks (316) in the medium (314).

6. The system (300) of any one of claims 1 to 5, further comprising:
a frame (308) of the vehicle (100);
a window (310) positioned in the frame (308) of the vehicle (100), wherein the laser (302) is positioned to emit the laser light (312) through the window (310) to the medium (314) outside of the vehicle (100); and
a heating system (350) connected to the window (310);
wherein the storage subsystem (336) holds instructions executable by the logic subsystem (334) to:
send control signals to the heating system (350) causing the heating system (350) to heat the window (310).

7. The system (300) of any one of claims 1 to 6, further comprising:
a display (348) positioned in the vehicle (100);
wherein the storage subsystem (336) holds instructions executable by the logic subsystem (334) to:
send control signals to the display (348) causing the display (348) to display a visual representation of the plurality of the plasma sparks (316) and/or a visual representation of the fluid data (338).

8. The system (300) of any one of claims 1 to 7, wherein the sensor system (304) comprises a camera (324) configured to acquire a plurality of images (328) of the one or more plasma sparks (316), and wherein the storage subsystem (334) holds instructions executable by the logic subsystem (336) to:
calculate the fluid data (338) of the vehicle (100) based at least on the plurality of images (328) of the one or more plasma sparks (316).

9. The system (300) of any one of claims 1 to 7, wherein the sensor system (304) comprises a radar subsystem (330) configured to emit radar waves toward the one or more plasma sparks (316) and detect reflected radar waves (332) that reflect back from the one or more plasma sparks (316), and wherein the storage subsystem (336) holds instructions executable by the logic subsystem (334) to:
calculate the fluid data (338) of the vehicle (100) based at least on the reflected radar waves (332).

10. A method (700) of measuring fluid data (338) of a vehicle (100), the method (700) comprising:
sending (702), to a laser (302) positioned in, on, or attached to the vehicle (100), control signals causing the laser (302) to emit laser light (312) into a medium (314) outside of the vehicle (100) to induce one or more plasma sparks (316) in the medium (314);
receiving (706), from a sensor system (304) positioned in, on, or attached to the vehicle (100), sensor data (322) indicating one or more properties of the one or more plasma sparks (316) detected by the sensor system (304), including an orientation of the one or more plasma sparks (316) relative to the vehicle (100) and/or relative to other plasma sparks (316);
calculating the fluid data (338) of the vehicle (100) based at least on the sensor data (322), indicating the orientation of the one or more plasma sparks (316) relative to the vehicle (100) and/or relative to other plasma sparks (316); and
outputting the fluid data (338) of the vehicle (100).

11. The method (700) of claim 10, wherein the fluid data (338) includes one or more of an angle of attack (340) of the vehicle (100), a velocity (342) of the vehicle (100), or a characterization of airflow (344) outside of the vehicle (100).

12. The method (700) of claim 10 or 11, further comprising:
sending (724) control signals to the laser (302) causing the laser (302) to adjust an operating parameter of the laser (302) based at least on the fluid data (338) of the vehicle (100).

13. The method (700) of any one of claims 10 to 12, wherein the laser (302) is a first laser (500), and wherein the method (700) further comprises:
sending (704), to a second laser (502) positioned in, on, or attached to the vehicle (100), control signals causing the second laser (502) to emit laser light (312B) into the medium (314) outside of the vehicle (100), wherein the first laser (312A) and the second laser (502) are configured such that laser light (312B) emitted from the first laser (500) and the second laser (502) collectively induces the one or more plasma sparks (316) in the medium (314).

14. The method (700) of any one of claims 10 to 13, further comprising:
sending (722), to a heating system (350) connected to a window (310) positioned in a frame (308) of the vehicle (100) through which the laser (302) emits the laser light (312) to the medium (314) outside of the vehicle (100), control signals causing the heating system (350) to heat the window (310).

15. The method (700) of any one of claims 10 to 14, further comprising:
sending (720), to a display (348) positioned in the vehicle (100), control signals causing the display (348) to display a visual representation of the plurality of the plasma sparks (316) and/or a visual representation of the fluid data (338).
